# EUROPEAN PATENT APPLICATION

(11) **EP 1 968 315 A1**
(43) Date of publication of application: **10.09.2008**
(21) Application number: 07300846.8
(22) Date of filing: 05.03.2007
(51) Int. Cl.: H04N 5/913, H04N 5/74, H04N 9/31

(54) **Projection system based on metamerism**

(71) Applicant: Thomson Licensing, 92100 Boulogne-Billancourt (FR)
(72) Inventor: Vigouroux, Jean-Ronan, 92648 Boulogne Cedex (FR); Bourdon, Pascal, 92648 Boulogne Cedex (FR); Doyen, Didier, 92648 Boulogne Cedex (FR)
(74) Representative: Huchet, Anne

(57) **Abstract**

The invention relates to a projection system for displaying at least one visual image based on three primary colours, comprising a signal processing unit (11) for converting said visual image into at least a visual image based on four primary colours, a frequency band being associated to each colour primary, first display means (12) for displaying three first primary colours of said visual image on a screen (14) and second display means (13) for displaying at least the fourth primary colour of said visual image on said screen. According to the invention, the system further comprises a notch filter (15) located between said first display means and the screen to attenuate or block at least a portion of the frequencies of at least one of the three first primary colours in the frequency spectrum associated to the fourth primary colour. The spectrum of the first three primary colours and the fourth primary colour are thus disconnected to guarantee more different spectral power distributions for two metamers.

Application to anti-camcorder systems

## Description

### Field of the invention

The invention relates to a projection system for displaying at least one visual image based on three primary colours, comprising a signal processing unit for converting said visual image into at least a visual image based on four primary colours, a frequency band being associated to each colour primary, first display means for displaying three first primary colours of said visual image on a screen and second display means for displaying at least the fourth primary colour of said visual image on said screen. The invention relates more specifically to the problem of protecting visual images, principally films or video sequences, from unauthorized copy or duplication such as recording the output of a projector.

### Background of the invention

WO 2004/040899 discloses techniques of imperceptibly altering the spectrum of a displayed image in a manner that discourages copying from a recording device. The recording device is typically a camcorder which has spectral sensitivity that is different from the human eye. While the human eye has three types of colour photosensor cone cells that respond to incident light with one particular set of spectral component response curves, video recording devices typically use a two-dimensional array of light sensing elements that respond to a different set of three primary spectral component response curves, usually RGB (Red, Green, Blue). So, the technique disclosed in this document is to use this characteristic for altering the spectrum of the displayed image in a way that does not change the perception of the image colours by the human eye but which changes those colours in the image captured by the video recording device. The spectral power distribution of at least a colour is altered across the image or in time in a way that is metameric to the human eye. These alterations are not perceivable to the human eye when the images are displayed on a screen.

But when these images are copied with a camcorder having different colour response characteristics than the human eye, these alterations are visible on the captured video. This characteristics enables to write a message such as "Illegal Copy" that appears on copies made in movie theatres by a camcorder. In the following description, colours having different spectral power distributions that result in a same colour perceived by the human eye are referred to as metamers.

The generation of two metamers for a given colour is rendered possible by using more than three primary colours, such as four. A projection system with three primary colours has not enough degrees of freedom to enable the creation of different metamers for one colour. The use of a fourth primary colour enables to have more than one spectral power distribution for said colour and these different spectral power distributions corresponding to metamers will be perceived as different colours by the camcorder.

The implementation of such a concept of anti-camcording based on metamerism implies to modify the current state of the art projection system based on three primary colours RGB (for Red, Green and Blue). The modification consists in adding means for displaying a fourth primary colour and signal processing means for converting the video signal based on three primary colours RGB into a signal based on four primary colours RGBP where P designates the fourth primary colour.

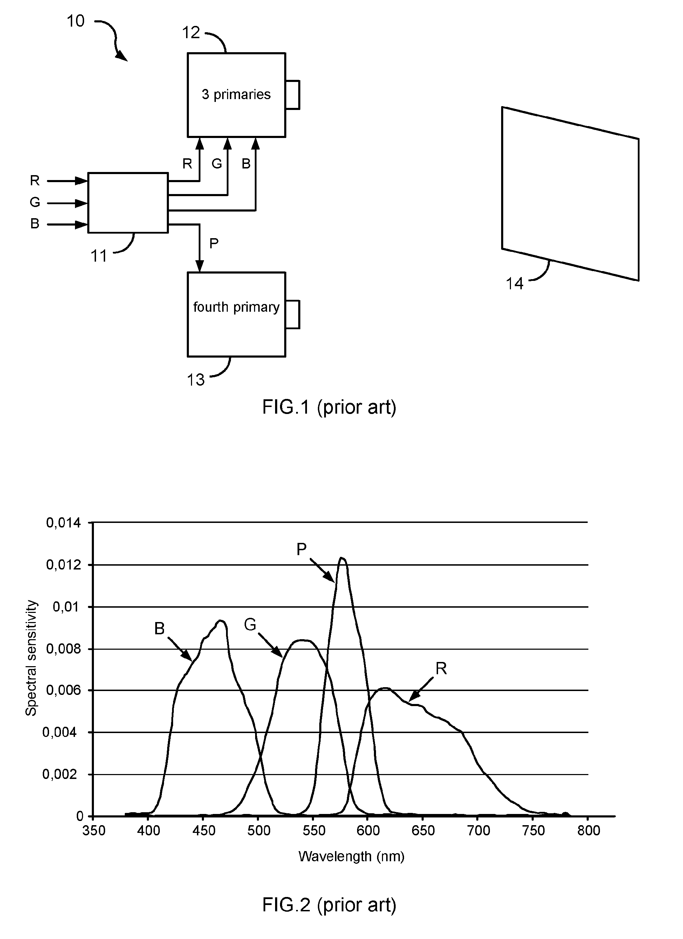

Figure 1 illustrates a projection system 10 comprising a signal processing unit 11 for converting a visual image based on 3 primary colours RGB into a visual image based on 4 primary colours RGBP, a first display unit 12 for displaying the primary colours R, G, B of the RGBP signal on a screen 14 and a second display unit 13 for displaying the fourth primary colour P of the RGBP signal on the screen 14. The signal processing of the initial RGB signal to generate the RGBP signal is described in detail in the patent application WO 2004/040899.

An example of spectral power distributions for four primary colours R, G, B, P is given in Figure 2. The spectral power distribution of the primary color B is comprised between 400 nanometers (nm) and 520 nanometers (nm). The spectral power distribution of the primary color G is comprised between 470 nanometers (nm) and 600 nanometers (nm). The spectral power distribution of the primary color R is comprised between 570 nanometers (nm) and 750 nanometers (nm). And the spectral power distribution of the additional primary color Y is comprised between 535 nanometers (nm) and 620 nanometers (nm).

The additional primary colour P allows the generation of multiple spectral power distributions that are perceived as the same colour by the human eye but result in different values in the video sequence recorded by a camcorder.

The first display unit is generally a widely used projector with three primary colours RGB. The global frequency spectrum of these three primary colours is spread over the whole visible spectrum. On the other hand, the second display unit uses a fourth primary colour in between two of the three first primary colours. In the example of figure 2, the fourth primary colour P is a yellowish primary colour in between the green and red primary colours.

As the whole visible spectrum is already covered by the three first primary colours RGB, the spectral power distributions of two metamers based on such three primary colours RGB and an additional primary colour P overlapping at least one of these three primary colour can not be very different from each other and thus the colour difference between these metamers on the recorded image will not be very disturbing for the viewer.

### Summary of the invention

It is an object of the present invention to alleviate this drawback.

According to the invention, this object is solved by using a fourth primary colour whose spectral power distribution is decoupled from the spectral power distributions of the three other primary colours. This decoupling is achieved by inserting a notch filter located between the three primary colour display means and the screen to attenuate or block at least a portion of the frequencies of the three first primary colours in the frequency spectrum associated to the fourth primary colour.

The invention concerns a projection system for displaying at least one visual image based on three primary colours, comprising a signal processing unit for converting said visual image into at least a visual image based on four primary colours, a frequency spectrum being associated to each colour primary, first display means for displaying three first primary colours of the visual image on a screen and second display means for displaying at least the fourth primary colour of the visual image on the screen. According to the invention, the projection system further comprises a notch filter located between said first display means and the screen to attenuate or block at least a portion of the frequencies of at least one of the three first primary colours in the frequency spectrum associated to the fourth primary colour.

Thus, the spectrum of the first three primary colours and the fourth primary colour are disconnected to guarantee more different spectral power distributions for two metamers.

In an exemplary embodiment, the notch filter blocks, in the frequency spectrum associated to the fourth primary colour, the frequencies of the two first primary colours.

Advantageously, the projection system further comprises a band-pass filter located between the second display means and the screen to reduce the frequency spectrum of the fourth primary colour.

According to a specific feature of the invention, the size of the bandwidth of the band-pass filter is equal or lower than the size of the rejected band of the notch filter.

According to a specific feature of the invention, the bandwidth of the band-pass filter and the rejected band of the notch filter are not centered on the same frequency.

The invention concerns also the use of such a projection system to generate two different spectral power distributions for a given colour in a picture displayed by the projection system.

### Brief description of the drawings

Exemplary embodiments of the invention are illustrated in the drawings and are explained in more detail in the following description. In the drawings :
- Fig.1: illustrates a prior art projection system based on four primary colours;
- Fig.2: illustrates spectral power distributions of the four primary colours of the projection system of Figure 1;
- Fig.3: illustrates a projection system based on four primary colours according to the invention;
- Fig.4: shows an example of spectral power distributions of the four primary colours of the projection system of Figure 3,
- Fig.5: shows a response curve of the notch filter of the projection system of Fig.3; and
- Fig.6: shows a response curve of the band-pass filter of the projection system of Fig.3.

### DESCRIPTION OF PREFERRED EMBODIMENTS

The invention will be described for a projection system having four primary colours but it can be easily transposed to a projection system using more primary colours.

According to the invention, it is proposed to introduce a notch filter between the first display unit 12 and the screen 14 to attenuate or block at least a portion of the frequencies of the three first primary colours in the frequency spectrum associated to the fourth primary colour. The notch filter is defined as a device that permits one predetermined frequency or a frequency band to pass and attenuates or blocks the frequency band outside this predetermined frequency or frequency band. The cut-off frequencies of this notch filter are neither zero nor infinite. This notch filter is also called pass-reject filter.

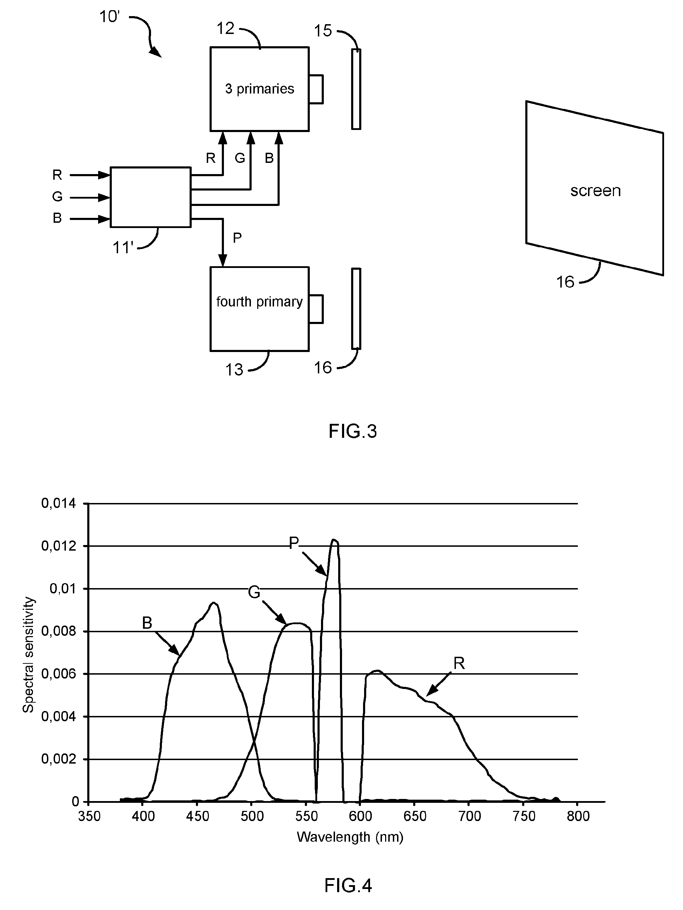

Figure 3 illustrates a projection system 10 according to the invention. It comprises a signal processing unit 11 for converting a visual image based on 3 primary colours RGB into a visual image based on 4 primary colours RGBP, a first display unit 12 for displaying the primary colours R, G, B of the RGBP signal on a screen 14 and a second display unit 13 for displaying the fourth primary colour P of the RGBP signal on the screen 14. As mentioned before, a notch filter 15 is inserted between the first display unit 12 and the screen 14. The function of the notch filter 15 is to block or attenuate at least a portion of the frequencies in the frequency spectrum of the primary colour P, i.e. frequencies or a frequency band in the frequency spectrum corresponding to the spectrum [535nm,620nm]. So it blocks the frequencies of the primary colours G and R

As illustrated in Figure 3, the projection system comprises also advantageously a band-pass filter 16 to reduce the spectrum of the primary colour P. This band-pass filter is inserted between the second display unit 13 and the screen 14 and its bandwidth is lower or equal to the rejected band of the notch filter 15. The band-pass filter 16 is for example designed to pass the frequencies corresponding to the range [565nm, 580nm]. In this embodiment, the rejected band of the notch filter can thus be reduced from [535nm,620nm] to [560nm,600nm].

An example of spectral power distribution of four primary colours R, G, B, P after filtering is given in Figure 4. The spectral power distribution of the primary color B is unchanged compared to the figure 2. The spectral power distribution of the primary color G is changed and reduced by the notch filter 15 to [470nm, 565nm]. The spectral power distribution of the primary color R is also changed and reduced by the notch filter 15 to [600nm,750nm]. Finally, the spectral power distribution of the additional primary color Y is also changed to [565nm,580nm].

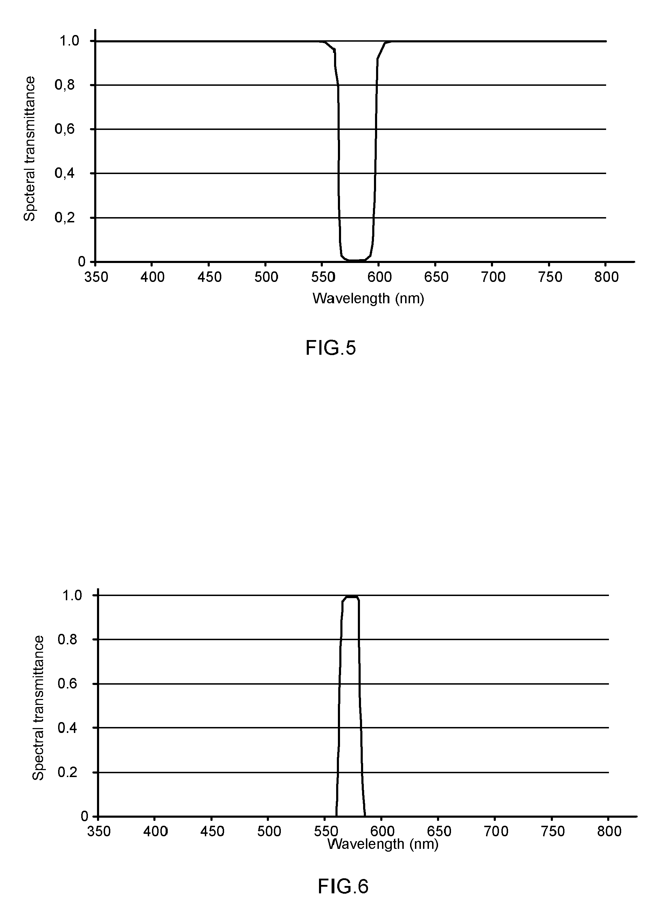

The response curve of the notch filter 15 and the band-pass filter 16 are illustrated by Figures 5 and 6. The notch filter stops the light in the band [565nm, 600nm]. The pass band filter lets the band [565nm, 580nm] pass.

It has to be noted that, in the examples given here, the bandwidth of the band-pass filter 16 and the rejected band of the notch filter 16 are not centered on the same frequency but this is not mandatory.

The effect of the filters 15 and 16 on the displaying on the screen is of course taken into account into the computation carried out by the signal processing unit 11.

This filtering allows to disconnect the spectrum of the first three primary colours RGB and the fourth primary colour P in order to guarantee very different spectral power distributions for two metamers.

Of course, the present invention is not limited to a fourth primary color consisting in a single peak. Should the fourth primary colour have more than one peak, additional notch filters will be inserted between the first display unit and the screen. Should the fourth primary colour extend to the limits, red or blue, of the visible spectrum, corresponding high-pass or low-pass filters will be inserted between the first display unit and the screen.

Otherwise, the present invention is not limited to a projection system having four primary colours. It can be applied to projection systems having more primary colours. If the projection system comprises six primary colours with a first display unit using three first primary colours and a second display unit using the three other primary colours, the notch filter will be inserted between the first or second display unit and the screen and the band-pass filter will be inserted between the other display unit and the screen.

While the invention has been described with reference to exemplary embodiments, it will be understood by the man skilled in the art that various changes may be made and equivalents may be substituted for elements thereof without departing from the scope of the invention.

## Claims

1. A projection system (10) for displaying at least one visual image based on three primary colours, comprising
- a signal processing unit (11) for converting said visual image into at least a visual image based on four primary colours, a frequency spectrum being associated to each colour primary,
- first display means (12) for displaying three first primary colours of said visual image on a screen (14) and
- second display means (13) for displaying at least the fourth primary colour of said visual image on said screen (14),
**characterized in that** it further comprises a notch filter (15) located between said first display means (12) and the screen (14) to attenuate or block at least a portion of the frequencies of at least one of the three first primary colours in the frequency spectrum associated to the fourth primary colour.

2. The projection system according to claim 1, wherein, the notch filter (15) blocks, in the frequency spectrum associated to the fourth primary colour, frequencies of two of the three first primary colours.

3. The projection system according to claim 1 or 2, wherein it further comprises a band-pass filter (16) located between said second display means (13) and the screen (14) to reduce the frequency spectrum of the fourth primary colour.

4. The projection system according to claim 3, wherein the size of the bandwidth of the band-pass filter (16) is equal or lower than the size of the rejected band of the notch filter (15).

5. The projection system according to claim 3 or 4, wherein the bandwidth of the band-pass filter (16) and the rejected band of the notch filter (15) are not centered on the same frequency.

6. Use of the projection system according to any one of the claims 1 to 5 to generate two different spectral power distributions for a given colour in a picture displayed by said projection system.
